(19) 

Europäisches Patentamt
European Patent Office
Office européen des brevets

(11) **EP 4 440 003 A1**

(12) **EUROPEAN PATENT APPLICATION**

(43) Date of publication:
**02.10.2024 Bulletin 2024/40**

(21) Application number: **23219563.6**

(22) Date of filing: **21.12.2023**

(51) International Patent Classification (IPC):
***H04B 10/112*** (2013.01)      ***H04B 10/118*** (2013.01)
***H04B 10/70*** (2013.01)

(52) Cooperative Patent Classification (CPC):
**H04B 10/1125; H04B 10/118; H04B 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023 GB 202304872**

(71) Applicant: **Kabushiki Kaisha Toshiba**
**Minato-ku**
**Tokyo (JP)**

(72) Inventors:
- **SINGH, Ravinder**
  **Cambridge, CB4 0GZ (GB)**
- **ROGER, Thomas**
  **Cambridge, CB4 0GZ (GB)**
- **PERUMANGATT, Chithrabhanu**
  **Cambridge, CB4 0GZ (GB)**
- **MARANGON, Davide**
  **Cambridge, CB4 0GZ (GB)**
- **SHIELDS, Andrew James**
  **Cambridge, CB4 0GZ (GB)**

(74) Representative: **Marks & Clerk LLP**
**15 Fetter Lane**
**London EC4A 1BW (GB)**

(54) **AN OPTICAL RECEIVER/TRANSMITTER WITH BEAMSTEERING**

(57)     An optical system comprising an optical beam separator; a beam-steering device adapted to receive an incoming optical signal and to output the incoming optical signal to the optical beam separator; a plurality of subsystems comprising a first communication subsystem, a second communication subsystem and a tracking subsystem; wherein the optical beam separator is adapted to separate the incoming optical signal into a first signal in a first optical band, a second signal in a second optical band, and an input beacon signal in a third optical band, and is adapted to output the first optical signal to the first communication subsystem, to output the second signal to the second communication subsystem and to output the input beacon signal to the tracking subsystem; and wherein the tracking subsystem is adapted to determine an alignment of the input beacon signal based on a first portion of the input beacon signal, and to control the beam-steering device to adjust the beacon signal alignment based on the determination.

Figure 1

EP 4 440 003 A1

**Description**

**FIELD OF INVENTION**

Embodiments described herein relate to an optical receiver/transmitter with beamsteering, a communication system and method.

**BACKGROUND**

In a quantum communication system, information is sent between a transmitter and a receiver by encoded single quanta, such as single photons. Each photon carries one bit of information which can be encoded upon a property of the photon, such as its polarization.
Quantum key distribution (QKD) is a technique which results in the sharing of cryptographic keys between two parties: a transmitter often referred to as "Alice"; and a receiver often referred to as "Bob". The attraction of this technique is that it provides a test of whether any part of the key can be known to an unauthorised eavesdropper, often referred to as "Eve". In many forms of quantum key distribution, Alice and Bob use two or more non-orthogonal bases in which to encode the bit values. The laws of quantum mechanics dictate that measurement of the photons by Eve without prior knowledge of the encoding basis of each causes an unavoidable change to the state of some of the photons. These changes to the states of the photons will cause errors in the bit values sent between Alice and Bob. By comparing a part of their common bit string, Alice and Bob can thus determine if Eve has gained information.

**BRIEF DESCRIPTION OF THE FIGURES**

Embodiments of the invention will now be described by way of example with reference to the accompanying drawings.

Figure 1 is a schematic of an optical system in accordance with an embodiment.

Figure 2 is a schematic illustrating a beam separator of the optical system of Figure 1.

Figure 3 is a schematic illustrating the tracking subsystem of the optical system of Figure 1.

Figure 4 is a schematic illustrating an optical system in accordance with an embodiment.

Figures 5A - 5C are schematic of subsystem signal processing components in accordance with some embodiments.

Figures 6A and 6B are schematics of subsystem beam separating components in accordance with some embodiments.

Figure 7 is a schematic of a quantum communication system in accordance with an embodiment.

Figure 8 is a schematic illustration of a two terminal communication system in accordance with an embodiment.

**DETAILED DESCRIPTION**

Various aspects and embodiments are set out in the appended claims.
In an embodiment there is provided an optical system comprising:

an optical beam separator;
a beam-steering device adapted to receive an incoming optical signal and to output the incoming optical signal to the optical beam separator;
a plurality of subsystems comprising a first communication subsystem, a second communication subsystem and a tracking subsystem;
wherein the optical beam separator is adapted to separate the incoming optical signal into a first signal in a first optical band, a second signal in a second optical band, and an input beacon signal in a third optical band, and is adapted to output the first optical signal to the first communication subsystem, to output the second signal to the second communication subsystem and to output the input beacon signal to the tracking subsystem; and
wherein the tracking subsystem is adapted to determine an alignment of the input beacon signal based on a first portion of the input beacon signal, and to control the beam-steering device to adjust the input beacon signal alignment based on the determination.

The disclosed system enables an increased communication capacity over free-space optical links, with low-latency real-time operation. This can address, for example, finite block length effects in quantum communication, and enable real-time secured communication based on QKD.
In an embodiment, a QKD protocol uses a quantum communication channel and a classical communication channel. The quantum communication channel is the channel over which two parties (e.g. a transmitter, "Alice", and a receiver, "Bob") may transmit quantum-encoded bits. The classical channel is a channel over which Alice and Bob may share information to agree on a quantum key (e.g. selected encoding and measurement bases, and a subset of transmitted quantum bit measurements for eavesdropper detection). Quantum key distribution schemes can be achieved over short distances (a few metres or kilometers) via fiber optic cable, but also over long distances (hundreds or thousands of kilometers) such as through the use of satellites.
One form of satellite QKD is performed between a satellite in the lower earth orbit (LEO) and an optical ground station (OGS). However, although a LEO satellite can scan almost entire earth in one day, it is visible from any one point on earth for a few minutes only. Therefore, the amount of data that may be transmitted is time-limited depending on the orbital parameters of the satellite and the position of the ground station. Furthermore, finite block length effects need to be taken into account for the calculation of the secret key in a satellite QKD network. Low capacity classical communication links, such as those using radio frequency communications, can limit the amount of rate at which a quantum key packets may be determined and encoded messages may be transmitted. Embodiments described herein provide for practical key distribution in which each satellite overpass can transmit data that contributes to a secure key that is sufficiently large to enable secured communication between two parties (nodes).

To achieve practical QKD transmission over the short periods of time in which a satellite is visible from a ground station, embodiments described herein provide for an optical system that can receive and process a single incoming optical signal that includes two multiplexed streams of information (e.g. a classical information stream and a quantum information stream). The information may be transmitted at frequencies within optical bands within a broad optical spectrum. An 'optical band' may be any band of wavelengths within the optical spectrum of all wavelengths less than 1700nm, and may be any band of wavelengths within the optical spectrum of 200nm to 1700nm. Wavelengths within these optical bands provide for higher information capacity when used to transmit information. For example, light with wavelengths within these optical bands have a lower beam divergence as compared to light transmitted at longer wavelengths (e.g. in the radio frequency). Over long distances, wider beam divergences may result in a reduction of received power at a receiver, leading to a lower signal to noise ratio and a loss in available information capacity. Furthermore, these optical bands allow for communication channels with larger bandwidths (range of frequencies) within the respective optical band, as compared to optical bands at longer wavelengths (such as radio frequencies). With higher available bandwidth (range of frequencies), the identified optical bands thus enable higher information capacity when used to transmit information. The optical bands used by the embodiments herein include bands within a wavelength range encompassing the near-infrared (NIR), infrared (IR) and visible light (VL) spectrum.

To minimise information loss from misalignment of optical signals, the optical device further includes a beam-steering device with an adjustable alignment. The optical device is also configured to process a beacon signal contained within the optical signal to maintain alignment of the composite optical signal with respect to the optical axis of the optical system. The optical system therefore provides high pointing accuracy and low latency fine-tracking. Furthermore, the optical devices disclosed herein are more compact, because the system is configured for multiplexing two or more streams of information with a single beacon for fine tracking. Thus, a single tracking device (e.g. a single mirror) may be used instead of relying on two separate tracking devices for each stream of information. Thus incoming light received across a broad optical spectrum may be steered and processed by a single optical device.

The high-precision, low-latency link alignment further enables the precise spatial tracking of optical beams with very low divergences (e.g. light transmitted at IR, NIR or VL wavelengths). Thus, the beam steering arrangements disclosed herein are particularly suited to the high information capacity optical channels used to convey the quantum and classical communication. The high capacity optical links and high precision, low-latency link alignment enables real-time processing of raw key packets. As such, a quantum key of a given length can be generated more quickly by the disclosed embodiments, or the disclosed embodiments allow for longer quantum keys may be generated within a time-limited visibility of the satellite from the ground station. This enables faster quantum communication processes but also minimizes data-storage requirements onboard the satellite.

Furthermore, the size restrictions of satellite components mean that limitations may be placed on antennae, mirrors or other elements operating as beam-steering devices. Thus, beam-steering devices in satellites may be smaller than those available on Earth. The use of the identified optical bands (e.g. of wavelengths less than 1700nm) having lower beam divergences mean that the receive power at the more compact satellite beam-steering devices may be maximised, thus improving information capacity within satellite communication systems and during implementation of a satellite QKD protocol.

The embodiments herein are described for quantum communication protocols between a ground station and a LEO satellite, but it will be understood that the benefits will also apply for other forms of data transmission (e.g. to transmit two sets of classical information within a single signal) and/or over other forms of long-range links (between two earth-based remote locations or between two satellites in orbit). For example, the optical devices can also be used directly between two users over air for short range links and can be interfaced with different size telescopic optic for a few to hundreds of kilometers link ranges. Thus, the optical devices may be used in terminals in city wide QKD networks as well as global QKD networks.

Deployment of fiber optic communication links over long distances may be challenging or impractical due to large transmission loss or mobility. The optical devices described herein provide for communication over free-space optical links. These links can be established between two or more distant parties by using optical elements that allow efficient coupling to air or freespace from a light source(s) and from air to light detector(s) or optical fiber.

The fine-tracking and multiband beam-delivery terminals of the embodiments herein can be used as direct free-space or air interface between two or more optical transceivers for short range terrestrial links. It can also be used as interface between optical transceiver and telescope on a satellite platform or on optical ground station for long range links.

The embodiments described herein additionally provide for active alignment of the free-space optical links to minimize the misalignment loss. The alignment process, which implements position sensing and pointing sub-systems, may be performed in a single step or multiple steps to achieve both wide field-of-view (FoV) and high positioning and pointing accuracy. The disclosed systems furthermore provide for latency of the position sensing and beam-steering to be extremely low to minimize the misalignment loss.

In an embodiment, the optical beam separator comprises:

a first wavelength sensitive beamsplitter arranged to separate the first signal and a first intermediate signal from the incoming optical signal, a second wavelength sensitive beamsplitter arranged to separate the second signal from the first intermediate signal.

In an embodiment, the first optical band is an infrared optical band or a near-infrared optical band, wherein the second optical band is an infrared optical band, a near infrared optical band or a visible light optical band; and wherein the third optical band is a visible light optical band.

In an embodiment, the tracking subsystem comprises:

a position sensor configured to determine an axial position of the input beacon signal, wherein the tracking subsystem is configured to control the steering mirror to adjust the axial position of the input beacon signal to align the axial position of the input beacon signal with a reference axial position; and/or a power sensor configured to determine a power of the input beacon signal, wherein the tracking subsystem is configured to control the steering mirror to adjust the power of the input beacon signal in a closed loop with the power sensor to maximise the determined power value.

In an embodiment, the tracking subsystem further comprises:

a beamsplitter arranged to separate the first input beacon signal portion and a second input beacon signal portion from the input beacon signal; and

a channel estimator arranged to perform channel estimation on the second beacon signal portion.

In an embodiment,

the first communication subsystem is adapted to output a third signal in the first optical band to the beam separator, the second communication subsystem is adapted to output a fourth signal in the second optical band to the beam separator; and the beam separator is further adapted to combine the third optical signal and the fourth optical signal into an output signal, and is adapted to output the output signal to the steering mirror.

In an embodiment, the plurality of subsystems further comprises a beacon signal generator adapted to output an output beacon signal to the beam separator, wherein the beam separator is further adapted to combine the output beacon signal with the third output signal and the fourth output signal into the output signal.

In an embodiment, the beam separator further comprises a third wavelength sensitive beamsplitter arranged to combine the output beacon signal with the third output signal and the fourth output signal into the output signal.

In an embodiment, one or both of the first communication subsystem and second communication subsystem comprises a free-space to optical fiber coupler.

In an embodiment, each of at least one of the plurality of subsystems comprises one or more spectral filters.

In an embodiment, the first optical communication subsystem comprises a subsystem beam separator adapted to split the first optical signal into a plurality of first optical sub-bands within the first communication band, and further adapted to combine received signals in the plurality of optical sub-bands into a signal in the first optical band.

In an embodiment, the second optical communication subsystem comprises a subsystem beam separator adapted to split the second optical signal into a plurality of first optical sub-bands within the first communication band, and further adapted to combine received signals in the plurality of optical sub-bands into a signal in the first optical band.

In an embodiment, the first communication subsystem comprises at least one supplemental beamsplitter, the at least one supplemental beamsplitter adapted to split the first signal into a plurality of optical signal outputs, wherein each first supplemental beamsplitter is a power beamsplitter or a wavelength-sensitive beamsplitter.

In an embodiment, the second communication subsystem comprises at least one supplemental beamsplitter, the at least one supplemental beamsplitter adapted to second the first signal into a plurality of optical signal outputs wherein each second supplemental beamsplitter is a power beamsplitter or a wavelength-sensitive beamsplitter.

In an embodiment, the optical system further comprises a telescope assembly adapted to transmit and receive optical signals from the steering mirror.

In an embodiment there is provided a quantum communication device comprising any optical system as defined above, wherein the first communication subsystem or second communication subsystem comprises a quantum decoder.

In an embodiment, there is provided a quantum communication device as defined above, the quantum communication device further comprising a second optical system according to any optical system as defined above, wherein the first communication subsystem or the second communication subsystem of the second optical system comprises a quantum encoder.

In an embodiment, there is provided a space vehicle comprising any optical system as defined above.

In an embodiment, there is provided a method of communication, comprising:

receiving an incoming optical signal at a beam-steering device;
outputting the incoming optical signal to a beam separator;
separating, by the beam separator, the incoming signal into a first signal in a first optical band, a second signal in a second optical band, and an input beacon signal in a third optical band,
providing the first optical signal to a first communication subsystem;
providing the second signal to a second communication subsystem;
outputting the input beacon signal to a tracking subsystem; and
determining, by the tracking subsystem, an alignment of the input beacon signal based on a first portion of the input beacon signal; and
controlling the beam-steering device to adjust the beam-steering device to adjust the input beacon signal alignment based on the determination.

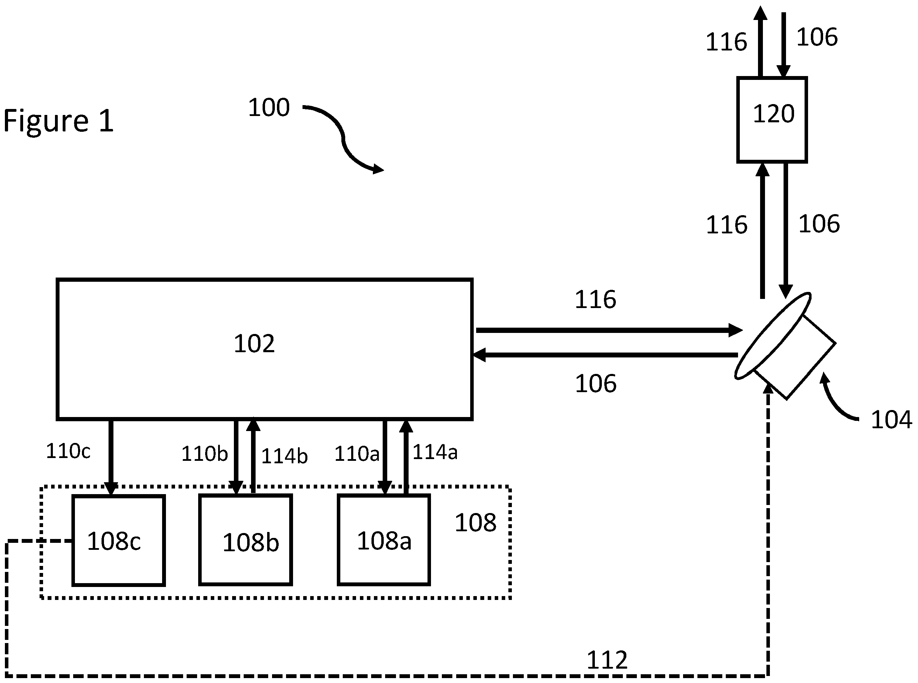

An embodiment is illustrated in Figure 1, which shows an optical system 100. The optical system 100 comprises a beam separator 102 and a beam-steering device such as a steering mirror 104. The steering mirror 104 is adapted to receive an incoming optical signal 106. The incoming optical signal 106 comprises a plurality of optical signals of different wavelengths. The plurality of optical signals are collimated and aligned along a single optical axis. For example, the incoming optical signal 106 may include three optical signals $\lambda_1$, $\lambda_2$, and $\lambda_B$ such that a combined optical signal $\lambda_T$ may be defined as:

$$\lambda_T = \lambda_1 + \lambda_2 + \lambda_B \quad \text{(Equation 1)}$$

Each optical signal may carry information. For example, the information may be encoded in amplitude, phase, polarization and/or spatial mode. The steering mirror 104 is also configured to output the incoming optical signal 106 to the beam separator 102. For example, the steering mirror is angled to reflect the incoming optical signal 106 into the beam separator 102. The steering mirror may be configured to reflect light across a broad optical spectrum (including the above-described wavelength ranges of the optical bands; for example 200nm - 1700nm), including light in the visible spectrum, infrared spectrum and near infrared spectrum.

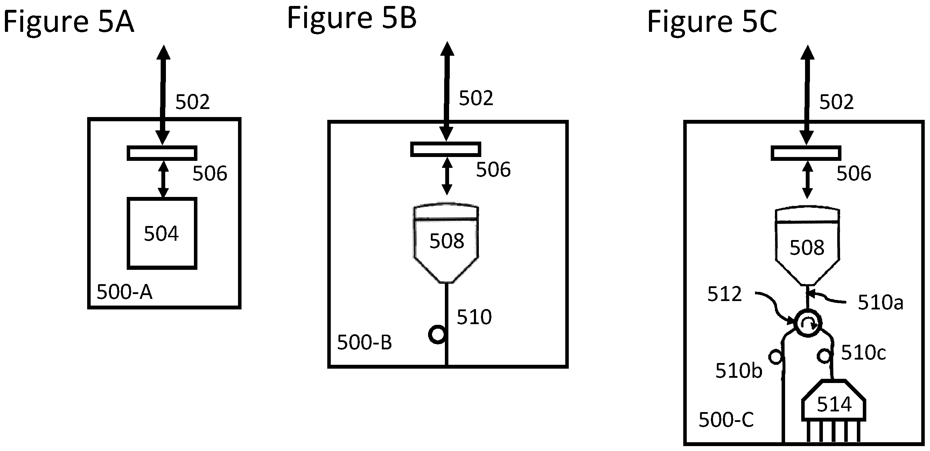

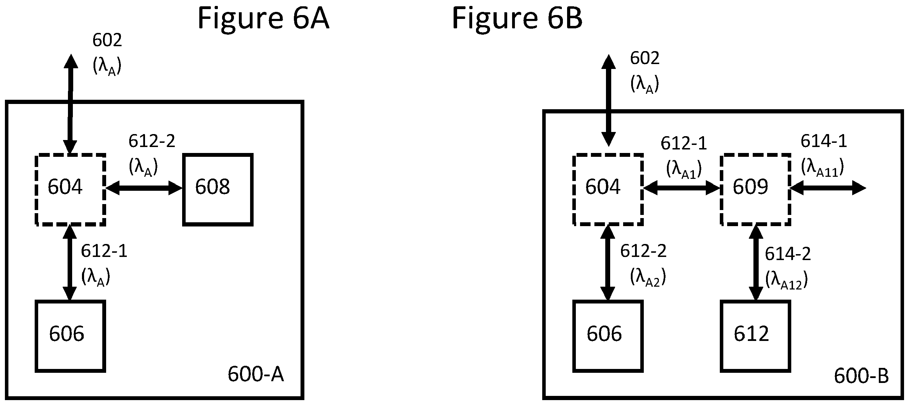

The optical system 100 further includes a plurality of subsystems 108 comprising a first communication subsystem 108a, a second communication subsystem 108b and a tracking subsystem 108c. Each of the first and second communication subsystem may include a number of optical components. The components may include optical fiber couplers, detectors, light sources, beamsplitters, polarisers, spectral filters, collimators and other elements. Examples of these will be described in more detail below in connection with Figures 5A - 5C, 6A and 6B.

The beam separator 102 is adapted to separate the incoming optical signal 106 into a plurality optical bands/optical channels/wavelength bands. In an embodiment, the beam separator 102 is adapted to separate the incoming optical signal 106 into a first signal 110a in a first optical band, a second signal 110a in a second optical band, and an input beacon signal 110a in a third optical band. The beam separator 102 is adapted to output the first optical signal 110a to the first communication subsystem 108a, to output the second signal 110b to the second communication subsystem 108b and to output the input beacon signal 110c to the tracking subsystem 110c. In this manner, the beam separator is configured to operate as a demultiplexer to separate a signals into a plurality of separate optical bands. Each optical band may be associated to a different subsystem such that the beam separator will direct signals within different optical bands toward a respective subsystem associated with that band. The beam separator may function as a coarse multiplexer performing Coarse Wavelength Division Multiplexing (CWDM) in which each optical band may span a wavelength range defined by the optical band used for the communication channel. These may include the IR, NIR and VL band (as well as optical bands within the IR spectrum of 1200nm - 1700nm, including the O-band, the E-band, the S-band, the C-band, the L-band and the U-band). Optical bands may also be more generally selected through choice of wavelength endpoints separated by hundreds of nanometres, for example 400nm or 500nm (so for a range of wavelengths of 400nm - 1700, the beam separator may divide the signal into optical bands of 400nm - 800nm, 800nm - 1200nm and 1200nm 1700nm). In some embodiments of the optical system 100, the first optical band is an infrared wavelength band and/or a near-infrared wavelength band, the second optical band is an infrared wavelength band, a near-infrared wavelength band and/or visible light wavelength band; and the third optical band is a visible light wavelength band.

The broad optical range (spanning NIR, IR and visible) enables the optical system to provide a variety of end-user applications and be compatible with a variety of technologies that may use signals anywhere within the broad optical band.

Providing multiple different optical signals for each communication channel allows the system to select an optical band to minimise background light levels. For example, daytime operation of optical communication be implemented using IR channels which perceive lower background light levels than NIR. For example, information may be transmitted over both the classical and quantum communication channels, with the beam separator performing coarse multiplexing to split an IR optical band into two smaller sub-bands in the IR optical band. In some embodiment, NIR signals may be processed during night time operation, using NIR detectors, which have lower dark count rates and higher detection efficiency when operated at room temperature. In these embodiments, signal processing can be performed by a signal processing component of a communication subsystem to remove background light levels and improve the signal to noise ratio. Furthermore, as discussed above, IR, NIR or VL wavelengths have a low beam divergence, meaning lower losses when data packets are transmitted over long distances. As such, lower levels of background light are received and a higher signal-to-noise ratio required. Satellite QKD networks using the optical devices described herein may thus operate during day and at night for maximum utilization of the service and minimize potential capacity bottleneck.

While two communication subsystems are illustrated, it will be understood that the plurality of subsystems 108 may comprise any number of additional communication subsystems, where the beam separator is configured to separate the incoming optical signal into a plurality of optical signals such that each subsystem is provided with one of the optical signals separated from the incoming optical signal 106.

In some embodiments, the beam separator may be bi-directional, such that the beam separator also functions as a beam combiner. In this embodiment, the beam separator is configured to receive a plurality of optical signals within a respective plurality of optical bands, and to combine the plurality of optical signals into a single output signal 116. The beam separator is configured to out the single output signal to the steering mirror for transmission of the output signal 116. In these embodiments, the first and second communication subsystems may provide optical signals to the beam separator 102. For example, the beam separator receives signal 114a from the first communication subsystem 108a and a signal 114b from the second communication subsystem 108b. In these embodiments each of the communication sub-

systems may comprise a light source, or may comprise couplers for coupling of the subsystems to light sources.

The tracking subsystem 108c is adapted to determine an alignment of the beacon signal 110c based on a first portion of the input beacon signal 110c. Based on the determination of the alignment, the tracking subsystem 108c controls the steering mirror 102 to adjust the beacon signal alignment based on the determination. For example, the tracking subsystem 108c may generate a control signal 112 and output the control signal 112 to the steering mirror 102 to adjust the position or configuration of the steering mirror 102. In response to the adjustment of the position or configuration, the alignment of the incoming optical signal 106, including the beacon signal 110c, will be adjusted. Further determinations of the alignment of the beacon signal may be performed by the tracking subsystem 108c to continuously monitor and adjust the alignment of the beacon signal. In this manner, the tracking subsystem 108c and the steering mirror form a closed loop control signal to achieve fine tracking of the incoming optical signal 106.

The beacon signal 110c co-propagates with the other beams. The beacon signal may be a continuous wave, or may be pulsed. The beacon signal may also be modulated for application specific requirements such as synchronization and/or classical communication.

The optical system may further comprise a telescope assembly 120 adapted to transmit and receive optical signals from the beam-steering device 104. The telescope assembly provides a long-range optical link to allow the optical device to send and/or receive signals from another terminal remote to the optical device 100.

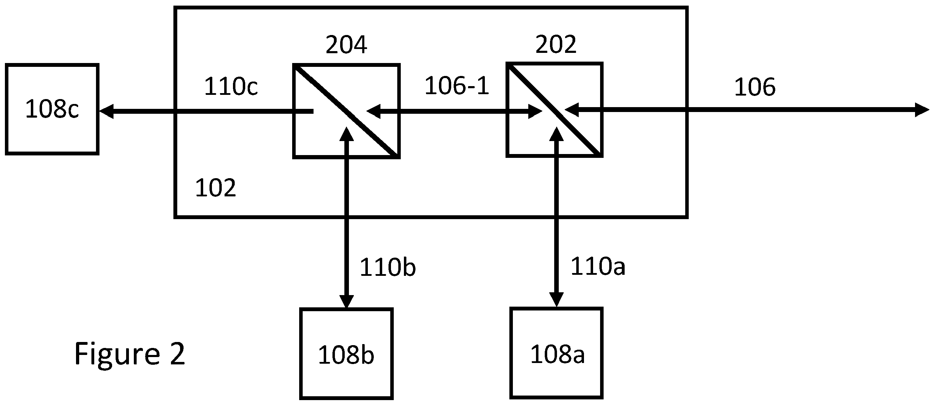

In accordance with an embodiment, Figure 2 illustrates a beam separator 102. In this embodiment, the beam separator 102 comprises a plurality of beamsplitters. The plurality of beamsplitters may comprise a first wavelength sensitive beamsplitter 202 and a second wavelength sensitive beamsplitter 204. The incoming optical signal 106 is directed into the first wavelength sensitive beamsplitter 202, which separates the incoming signal 106 into the first signal 110a and a first intermediate signal 106-1. The first intermediate signal 106-1 is directed into the second wavelength sensitive beamsplitter 204, which separates the first intermediate signal 106-1 into the second signal 110b and the third signal 110c. Each of the first signal 110a, second signal 110b and third signal 110c are respectively directed into the first communication subsystem 108a, second communication subsystem 108b and tracking subsystem 108c.

Each beamsplitter may be a free-space beamsplitter.

Each wavelength sensitive beamsplitter is configured to separate incoming optical signals into different optical bands. For example, the wavelength sensitive beamsplitters may each be a dichroic mirror or filter adapted to selectively transmit and reflect incoming light.

Considering the beam separator 102 receiving the incoming signal as defined by Equation 1, the first beamsplitter 202 splits the combined optical signal $\lambda_T$ into the first signal $\lambda_1$ and the first intermediate signal $\lambda_{IS1} = \lambda_2 + \lambda_B$. The second beamsplitter 204 then splits the first intermediate optical signal $\lambda_{IS1}$ into the second signal $\lambda_2$ and the third signal $\lambda_B$.

The first wavelength sensitive beamsplitter 202 and the second wavelength sensitive beamsplitter 204 are arranged in sequence, with the output of the first beamsplitter being directed to the input of the second beamplitter. In some embodiments, the beamsplitter 102 may include additional wavelength sensitive beamsplitters arranged in sequence after the first and second beamplitters of Figure 2. For example, beam separator further comprises a third wavelength sensitive beamsplitter arranged to separate the input beacon signal from a second intermediate signal that is separated from the first intermediate signal by the second beamsplitter 202. In general, each wavelength sensitive beamsplitter of the sequence is arranged to receive an input from the output of a preceding wavelength dependent beamsplitter and split a signal from the input of the beamsplitter. While two beamsplitters are illustrated, it will be understood that the beam separator can include additional beamsplitters to split off or to combine a corresponding number of additional optical signals (being generated by or being received by a corresponding number of additional subystems).

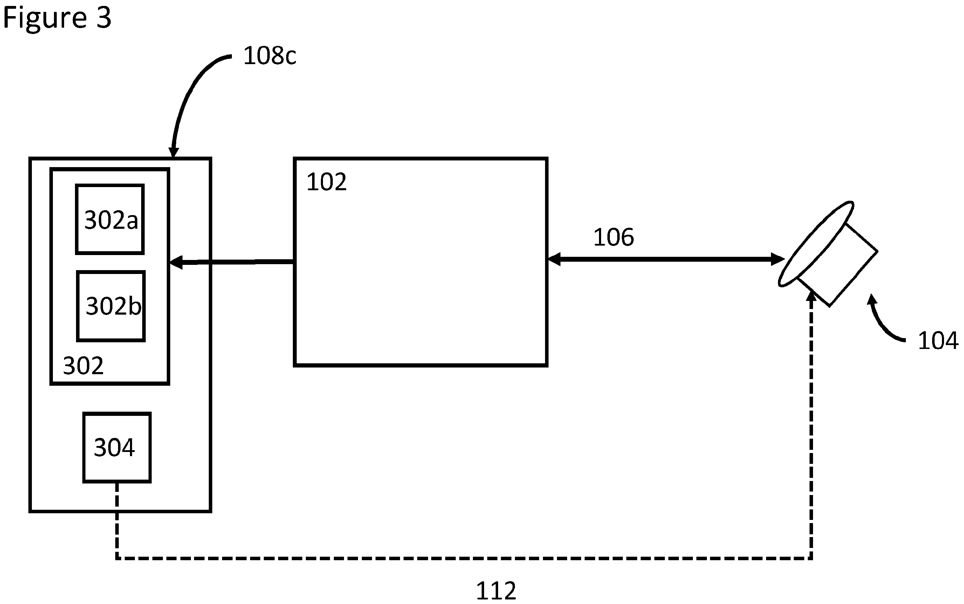

An embodiment of the optical device is illustrated by Figure 3. In this embodiment, the tracking subsystem 108c comprises one or more sensors 302 configured to receive at least a portion of the beacon signal 110c. The one or more sensors 302 may include a position sensor 302a. The position sensor 302a is configured to determine an axial position of the input beacon signal 110c. In an embodiment, the position sensor 302a is a camera configured to capture images of received light, including the beacon signal. The position sensor 302a receives the beacon signal and determines a position of the received beacon signal in the plane of the received image and with respect to the optical axis of the optical device. The position sensing system may use optical sensor(s) or radio sensor(s) or both types of sensors.

The tracking subsystem 108c is configured to then determine a position offset between the determined position of the beacon signal 110c and a reference position in the image plane. The control signal 112 is then generated based on the determined position offset and sent to the steering mirror. For example, the generated control signal is a control signal that provides instructions to the steering mirror, to adjust a configuration of the steering mirror so as to adjust an axial position of the reflected incoming beam signal by an amount corresponding to the position offset determined by the position sensor. The determination of the position offset and the generation of the control signal 112 may be performed by a separate beacon controller 304 forming part of the tracking subsystem 108c.

The tracking subsystem 108c is configured to continually monitor the position of the received beacon signal 110c, determine a position offset and provide and provide further control signals to the steering mirror 104. In this manner the axial position of the beacon is continually monitored and updated, such that the tracking subsystem is configured to control the steering mirror to adjust the axial position of the input beacon signal in a closed loop with the position sensor to align the axial position of the input beacon signal with a reference axial position.

The one or more sensors 302 may also include a power sensor 302b configured to determine a power of the input beacon signal 110c. In an embodiment, the power sensor 302b is a sensor configured to determine an intensity of received light, including the received beacon signal portion. The power sensor 302b receives a portion of the beacon signal and determines the intensity of the received beacon signal portion.

The tracking subsystem 108c is configured to then generate a control signal 112 to provide instructions to the steering mirror to adjust a configuration of the steering mirror. The change in steering mirror configuration will adjust an axial position of the reflected incoming beam signal, changing an axial alignment between the beacon signal 108c and the power sensor 302b, and thus changing the power level determined by the power sensor 302b.

The tracking subsystem 108c is configured to continually monitor the power of the received beacon signal 110c and provide updated control signals 112 to the steering mirror to maximise the power of the beacon signal received by the power sensor 302b.

For example, the tracking subsystem 108c may analyse the received power to determine a change in determined power, and a rate of change of determined power, and apply statistical methods to generate control signals to identify a local maxima. In this manner, the tracking subsystem is configured to control the steering mirror 102 to adjust the power of the input beacon signal in a closed loop with the power sensor to maximise the determined power. The determination of the power of the input beacon signal 110c and the generation of the control signal 112 may be performed by the separate beacon controller 304 forming part of the tracking subsystem 108c.

Since the tracking subsystem 108c is contained within the same, compact optical device as the communication channel subsystems, and the beacon signal co-propagates and is axially aligned with the optical signals carrying information, the optical device is able to minimise misalignment between the optical device and the optical signals that might otherwise arise due to spatial separation between the tracking beacon and application-related beams.

The beam-steering device may use a steering mirror (or steering mirrors). The steering mirrors may be based on gimbals or piezo-electric stages. Mirror-based beam steering systems have high reflection efficiencies and thus provide an operation over a broad optical spectrum. The control signal 112 provided by the tracking subsystem may be configured to control the actuation of the gimbal steering mirrors or to control the position of the piezo electric stages. Piezeo electric stages beneficially provide a low latency response time upon receiving a control signal. In an embodiment, fast steering mirrors are used in the beam-steering assembly. Steering mirrors provide a wide Field of View (FoV), and as such may receive incoming optical beams incident across a wider range of angles than other beam steering devices (e.g. diffraction gratings). A steering mirror may also be deformable in response to a control signal to control direction of reflected light as well to adjust the wavefront of the reflected light.

Fast steering mirrors provide very fast actuation response times (e.g. millisecond response times) to provide fast steering speeds. Additionally, the one or more sensors may measure with a very fast response time (e.g. millisecond response times), and may be configured with cameras to capture images at a high framerate (e.g. millisecond frame rates), and the signal processing performed by the tracking subsystem may be performed at a high speed. Thus, the power and position of the received beacon signal can be repeatedly measured and processed, with the steering mirror adjusted, at very low latency, thus providing for very low latency beam tracking. In one embodiment, the beamsteering device includes a piezo-electric tip/tilt actuator based bi-directional steering and high fame rate camera or high bandwidth position sensitive detector to minimise the tracking latency.

In some embodiments, a single steering mirror is used, leading to reduced size and weight. Since a single steering mirror is used to steer a beam comprising multiple communication channels, the size and weight is further reduced as compared to a system with steering mirrors for each communication channel. The reduction of size and weight is of technical benefit in satellite systems, since such systems are launched into space upon launch vehicles where payload mass and dimensions are limited.

The beam-steering device may alternatively use spatial light modulators (SLM), phased arrays or diffraction gratings. SLMs and diffraction gratings enable multiplexing and point-to-multipoint operations.

The beam-steering device and beam tracking subsystem of the optical device provide for fine-tracking capability. The optical beacons described herein may be understood as "fine tracking" beacons. The optical device may be provided in a terminal that also includes a coarse-tracking system. The coarse-tracking system comprises a coarse beacon sensor configured to receive light over a wide field of view to achieve a coarse beacon alignment. The coarse tracking error may be on the order of magnitude of a microradian, and the fine tracking error may be on the order of magnitude of a tenth of a microradian. Once the coarse beacon has been acquired, the fine tracking systems described herein may then acquire the fine tracking beacon for precise alignment. The beacon tracking systems disclosed herein may thus overlap with the coarse-tracking capability of the current commercial satellite platforms and optical ground stations to provide wide coverage and precise alignment.

Nevertheless, a coarse beacon is not a required element for terminal alignment. In operation, as soon as the optical device has acquired and "locked on" to the fine tracking beacon, the system is able to continuously monitor and track the signal due to the very low latency and fine tracking capability of the tracking system. This eliminates the need for a secondary coarse tracking system.

Terminals comprising the optical devices herein thus may not be provided with a coarse beacon - i.e. the tracking subsystem may be the only tracking system provided on the terminal and the terminal may include only one beam-steering device controlled by the beam tracking subsystem. This further reduces size and weight of the terminal, which is advantageous when the terminal is deployed on a satellite or space vehicle.

Transparency to broad optical spectrum and ability to steer multiple beams simultaneously can be advantageous in solving multiple issues such as a) capacity bottleneck in classical free-space communication b) finite block length effects in satellite QKD, c) continuous day-night operation of satellite or terrestrial free-space QKD networks and d) combined quantum and classical free-space optical communication to enable real-time satellite-to-ground (QKD)

In the above described embodiments, the optical device 100 is configured to operate as a receiver device, to receive incoming optical signal 106 and separate the optical signal 106 into component signals for multiple subsystems. Additionally, in some embodiments, the optical device may also be configured as a transmitter device. In these embodiments, the optical device 100 is configured to generate optical signals at sources forming part of the optical device, and combine the generated optical signals into a single optical signal 116 for transmission from the optical device.

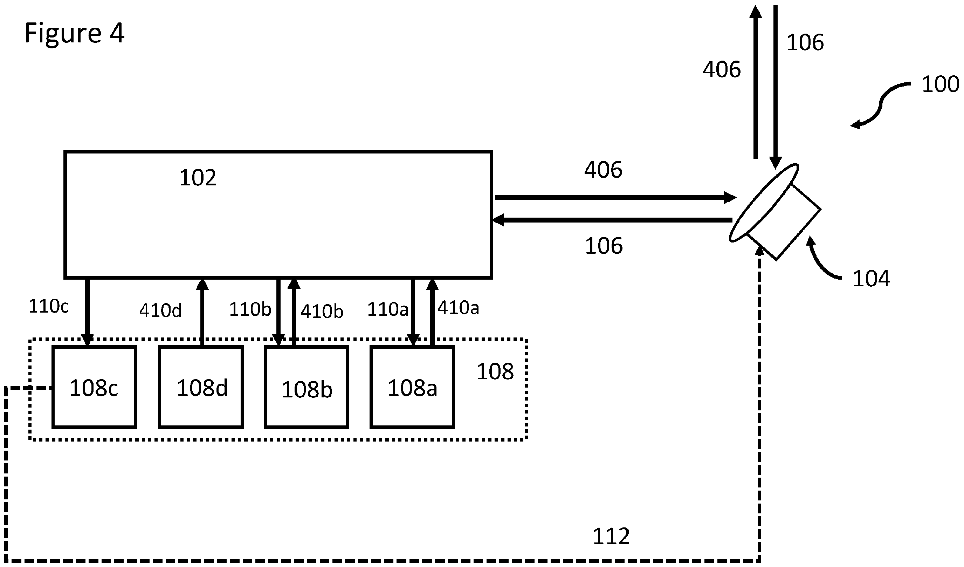

In these embodiments, and as illustrated in Figure 4, the first communication subsystem comprises 108a an optical source adapted to output a third signal 410a in the first optical band to the beam separator 102. Additionally, the second communication subsystem 108b comprises an optical source adapted to output a fourth signal 410b in the second optical band to the beam separator 102. The beam separator 102 is further adapted to function as a beam combiner and combine the third optical signal 410a and the fourth optical signal 410b into an output signal 406, and is adapted to output the output signal 406 to the steering mirror 104. For example, the beam separator 102 as described above in connection with Figure 2 may function as a beam combiner, wherein each beamsplitter of the beam separator 102 functions as a beam combiner.

As illustrated in Figure 4, the plurality of subsystems 108 may further comprise a beacon signal generator 108d adapted to output an output beacon signal 410d to the beam separator 102, wherein the beam separator 102 is further adapted to combine the output beacon signal 410d, the third output signal 410a and the fourth output signal 410b into the output signal 406. In these embodiments, the components of the optical device (including beam separator components and subsystems) are constructed to be optically aligned to provide an axially aligned output signal. Thus, when used for tracking, the information channels may be accurately aligned by tracking and align the receiver to the beacon signal.

As described above, each of the plurality of subsystems 108a - 108c comprise at least one component. Figures 5A - 5C and Figures 6A and 6B illustrate subsystems comprising example components that may be included within each of the plurality of subsystems.

Figure 5A illustrates an example subsystem 500-A. The subsystem 500A comprises a component 504 that processes the optical signal received by the subsystem 500-A. The component 504 may include one or more detectors configured to measure incoming light and provide an output signal to indicate properties of the incoming light (e.g. intensity, wavelength, polarisation, etc.). For example, the component may be a quantum decoder. Additionally, or alternatively, the component 504 may include one or more generators configured to generate light. For example, a generator may comprise a laser and may function as a quantum encoder. The subsystem 500-A may additionally comprise one or more spectral filters 506 at the input/output between the subsystem 500A and the beam separator 102. Each of the one or more spectral filters removes wavelengths outside a filter range from an optical signal passing through the filter, either by absorbing or reflecting the unwanted wavelengths and being transparent to wavelengths within a filter range. In these embodiments, the subsystem 500A may be an example of either the first communication subsystem 108a or the second communication subsystem 108b.

Figure 5B illustrates an example subsystem 500-B. The subsystem 500-B is a unidirectional optical fiber coupler configured to couple the free space beam separator 102 to an optical fiber 510. The optical fiber may function as an optical input or an optical output. The subsystem 500-B may comprise a collimator 510. The collimator is configured as a coupler between free-space optics and fiber optics, such that light incoming to the collimator from free-space optics is collimated into an optical fiber output 510. Conversely, light transmitted through the optical fiber 510 and into the collimator may be output in free-space from the collimator. The subsystem 500-B may additionally comprise one or more spectral filters 506 at the input/output between the subsystem 500A and the beam separator. Subsystem 500-B may be coupled to a generator or a detector via the optical fiber 510.

Figure 5C illustrates an example of a subsystem 500-C. The subsystem 500-C is a bi-directional optical fiber coupler configured to couple the free space beam separator 102 to an input optical fiber and to an output optical fiber. For example, the subsystem 500-B comprises a collimator 508, a circulator 512 and optical fibers 510a - 510c. The collimator is configured as a coupler between free-space optics and fiber optics, such that light incoming to the collimator from free-space optics is collimated into an optical fiber output 510a. Conversely, light transmitted through the optical fiber 510a and into the collimator 508 may be output in free-space from the collimator 508. The circulator 512 couples optical fiber 510a to input optical fiber 510b and output optical fiber 510c and functions to permit bi-directional transmission of light. In the illustrated embodiment, light entering the circulator from optical fiber 510b will exit the circulator into optical fiber 510a. Light entering the circulator from optical fiber 510a will exit the circulator at fiber 510c.

The unidirectional or bi-direcitonal optical fiber coupler may further comprise a fiber multiplexer coupled to an optical fiber functioning as an input or output of the subsystem. One example is illustrated in Figure 5C, which shows fiber multiplexer 514 coupled to output fiber 510c. Alternatively (or additionally), the subsystem 500-C may comprise a fiber multiplexer coupled to input fiber 510b. Subsystem 500-B may also comprise a fiber multipliexer coupled to optical fiber 510. The fiber multiplexer 514 is configured to multiplex and demultiplex optical between a single signal and a plurality of signals. Thus, the subsystem 500-C may be configured to perform dense wavelength multiplexing, where the single optical band for the subsystem may be subdivided into smaller dense wavelength bands (e.g. with wavelength ranges on the order of fractions of a nanometer). Thus, a higher quantity of information may be encoded within an optical signal processed by the optical device. Furthermore, the subsystem 500-C may be used to select a narrower part of an optical band separated by the beam separator 102 (e.g. a single dense wavelength band), thereby excluding wavelengths outside this narrower band from reaching the detector. Thus, the overall background level of light can be reduced and improve the signal-to-noise ratio.

The subsystem 500-C may additionally comprise one or more spectral filters 506 at the input/output between the subsystem 500-C and the beam separator. Subsystem 500-C may be coupled to a generator and/or a detector via the optical fibers 510b and 510c.

Figures 6A and 6B show subsystems 600-A and 600B that comprise a subsystem beam separator adapted to split an incoming optical signal 602 into a plurality of optical signal outputs. The multiple optical signal outputs each are directed toward a signal processing component of the subsystem. Each signal processing component arranged to receive a signal of the plurality of optical signals may be a detector, source or fiber coupler (for example, each component may be any one of the subsystems 500-A, 500-B or 500-C).

As illustrated, the subsystem beam separator comprises at least one supplemental beamsplitter/combiner. The at least one supplemental beamsplitter include beamsplitter 604 adapted to split a signal 602 received by the subsystem 600-A into optical signal 612-1 and optical signal 612-2. The first optical signal 612-1 is directed toward and received by component 606, and the second optical signal 612-2 is directed toward and received by component 608.

As shown in Figure 6B, in place of component 608 there may be a further supplemental beamsplitter 609 of the subsystem 600-A. The beamsplitter 609 may then split the signal 612-1 into signal 614-1 and 614-2, which are then each be directed toward and received by other components of the system, such as signal processing component 612 (arranged to receive signal 614-2), or further beamsplitters.

The subsystem beam separator may be bi-directional, and adapted to combine input optical signals from components of the subsystem into a single optical output and provide that output to the beam separator 102.

In some embodiments, each of the supplemental beamsplitters may be a wavelength-sensitive beamsplitter such that a signal received by the subsystem is split into a plurality of wavelength bands. As shown in Figure 6B, every supplemental beamsplitter in the subsystem beam separator may be a wavelength-sensitive beamsplitter configured to split into different optical bands. For example, when incoming signal is at wavelength $\lambda_A$, beamsplitter 604 will output signal 612-1 at wavelength $\lambda_{A1}$ and output signal 612-2 at wavelength $\lambda_{A2}$. Beamsplitter 609 will receive signal 612-1 and split it into signal 614-1 at wavelength $\lambda_{A11}$ and signal 614-2 at wavelength $\lambda_{A12}$.

In general, each component signal in an optical band separated out by beam separator 102 may itself be formed of N multiplexed signals, each in an optical sub-band of the optical band. For example, an optical signal $\lambda_1$ in a first optical band (e.g. IR band) may comprise N multiplexed subsignals such as $\lambda_{11}$, $\lambda_{12}$ ... $\lambda_{1N}$ where $\lambda_1 = \lambda_{11} + \lambda_{12} + \cdots + \lambda_{1N}$. The subsystem beam separator is configured as a free-space multiplexer/demultiplexer to enable a second stage of coarse wavelength division multiplexing of multiple coarse optical sub-bands within the optical band separated out by the coarse multiplexing of beam separator 102. For example, the beam separator 102 is configured to perform a first stage of coarse WLDM to separate the incoming optical signal into optical bands on the order of 400nm, and the subsystem beam separator performs a second stage of coarse WLDM to divide the optical band into a plurality of coarse sub-bands, each on the order of 10 - 50nm. In embodiments where subsystem also includes a fiber multiplexer, this two-stage coarse multiplexing may be combined with a dense multiplexing step for further precision in the wavelength band selection.

Thus, a higher quantity of information may be encoded within each coarsely multiplexed optical signal. Furthermore, the subsystem beam separator may be used to select a narrower part of an optical band separated by the beam separator 102, thereby excluding wavelengths outside this narrower band from reaching the detector. Thus, the overall background level of light can be reduced and improve the signal-to-noise ratio.

Additional beamsplitters may also be present within each subsystem 600-A and 600-B to further divide the optical signal. In the embodiments of Figures 6A and 6B, additional beamsplitters may be provided in place of any of the illustrated components, and configured to output divided optical signals into subsystem components. For example, an additional beamsplitter may be provided in place of component 606 (in a manner similar to how an additional beamsplitter is provided in place of component 608).

In some embodiments, any of the supplemental beamsplitters may be a power beamsplitter adapted to split an incoming signal into optical signals of the same wavelength but having different intensities. A power beamsplitter may be configured to split incoming light into two beams of a desired intensity ratio (for example, 50:50 or 90:10). As illustrated in Figure 6A, each supplemental beamsplitter may be a wavelength-sensitive beamsplitter. For example, incoming beam 602 is at wavelength $\lambda_A$ and each of the output signals 612-1 and 612-2 are also at wavelength $\lambda_A$. Thus, the subsystem beam separator may be configured to separate out portions of the same received optical signal for processing by different components of the subsystem. Thus, a more compact optical device is provided.

In some embodiments, optical tracking system 108c comprises one or more beamsplitters in accordance with either subsystem 600-A or subsystem 600-B as described above. In these embodiments, the components of the subsystem comprise the one or more sensors and a channel estimator arranged to perform channel estimation on the beacon signal portion. For example, the tracking subsystem 108c comprises a beamsplitter 604 arranged to separate a first input beacon signal portion 612-2 and a second input beacon signal portion 612-2 from the input beacon signal 100c. In this embodiment, the component 608 comprises the one or more sensors 302 as described above and the component 606 comprises the channel estimator. The beamsplitter may be a power beamsplitter or a wavelength-sensitive beamsplitter. In an embodiment, the beacon signal portion 612-1 directed into the channel estimator is of smaller power than the beacon signal portion 612-2 directed into the one or more sensors. For example, the ratio of splitting of 612-2:612-1 may be 90:10.

The channel estimator is configured to estimate properties of the communication channel of the beacon signal. The channel estimation may include polarisation estimation and wavefront error estimation. For example, the channel estimator may comprise a phase sensitive array such as a Shack-Hartmann wavefront sensor. The phase sensor array is configured to detect wavefront distortion due to propagation in atmosphere, and for detection of pointing error (caused by dynamic fluctuations to the wavefront). Also by way of example, the polarisation estimation may be performed by maximising power through a linear polariser, such as a set of birefringent waveplates (quarter-, half-, quarter-wave), or via a crystal variable retarder. The channel estimation may be performed by comparing received signals with stored reference parameters. The channel estimator may use the result of the channel estimation to perform corrections on the beacon signal (for example, to refine the determination of the bacon position or the power of the beacon).

The channel estimator may output the result of the channel estimation to any other subsystem in the optical device for use by that subsystem or to the beam-steering device for use by that beam steering device. For example, the channel estimator may output a polarisation estimation and wavefront error estimation to the first or second communication subsystems for those subsystems to correct for errors in the optical signal. Also by way of example, the channel estimator may also be configured to provide a control signal to control the beam-steering device. For example, the beam-steering device may be a deformable mirror, and the channel estimator controls the mirror deformation to correct for wavefront distortion and to correct for pointing errors. The channel estimator may also output a control signal to a spatial light modulator of the optical system and provided at the input of the beam separator 102 to correct for wavefront distortion and to correct for pointing errors.

In some embodiments, any other subsystem of the optical device (e.g. the communication subsystems) may also include a channel estimator as a component of the subsystem. The subsystem is then configured to separate out a portion of a received optical signal and provide that portion to the channel estimator, in the same manner as described above for the tracking subsystem 108c.

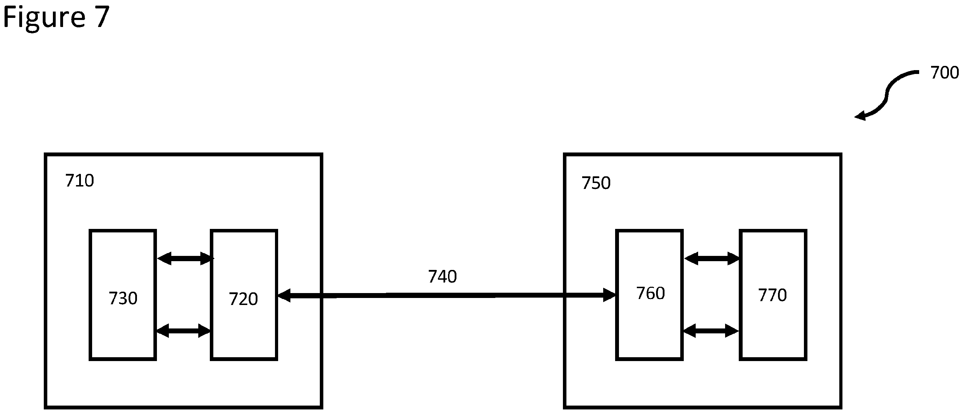

Figure 7 illustrates a quantum communication system 700. In this embodiment, there is a first terminal 710 and a second terminal 750. The first terminal 710 and second terminal 750 communicate over a free space optical link 740. Each of the first terminal 710 and receiver terminal 750 comprises an optical device according to one of the above described embodiments. The first terminal comprises a beam separator/combiner 720 and a plurality of subsystems 730. The second terminal comprises a beam separator/combiner 760 and a plurality subsystems 770.

The first terminal 710 comprises a quantum encoder. The quantum encoder may be included in one of the communication subsystems, or may be coupled one of the communication subsystems through a free-space or a fiber optic link. The quantum encoder is configured to generate quantum information in the form of a quantum bit stream (such as encoded photons). For example, the quantum encoder comprises a laser configured to generate light pulses, and encoding apparatus (such as polarising elements) to encode the generated light pulses.

The second terminal 750 comprises a quantum decoder. The quantum decoder may be included in one of the communication subsystems or may be coupled to one of the communication subsystems through a free-space or a fiber optic link. The quantum decoder is configured to decode quantum information in a chosen basis. For example, the quantum decoder may comprise light detectors coupled to polarising optics that may be switched between polarisation states based on the chosen basis measurement.

The first and second terminals may each include classical communication systems, including a computing device configured to transmit and receive classical information in the form of a classical bit stream. The classical communication systems may be included in one of the subsystems of each terminal, or may be coupled to one of the subsystems of each terminal through a free-space or a fiber optic link.

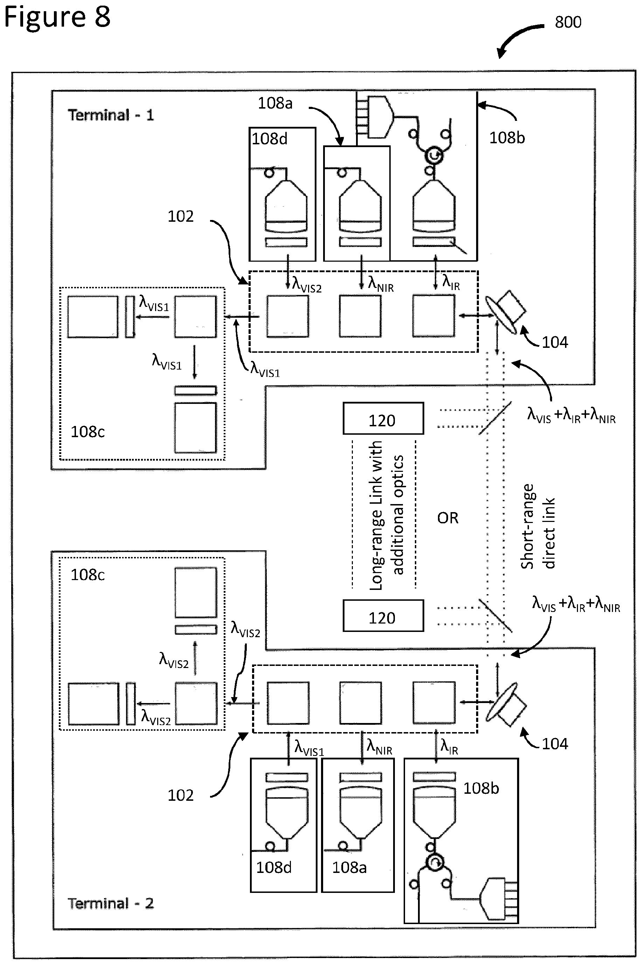

Figure 8 illustrates an example embodiment of an optical communication system 800. The optical communication system 800 includes a first terminal and a second terminal. Each of the first terminal and second terminal comprise an optical device according to one of the embodiments above. As illustrated, each of the first terminal and second terminal comprise a beam separator 102, a steering mirror 104 and a plurality of subsystems 108. The optical communication system 800 can be used for QKD in the NIR and/or in the IR bands along with a classical communication link in the IR band and/or visible band while the tracking is performed in the visible band. The beam-steering mirror 104 at each terminal is able to reflect and steer a broad range of optical signals which are then separated into visible, NIR and IR channels using wavelength sensitive beam-splitters 102. The visible region of the spectrum is further split into two parts to allow transmission and reception at two different wavelengths. As shown in Figure 8, terminal 1 receives visible light at wavelength $\lambda_{VIS1}$ and transmits visible light at wavelength $\lambda_{VIS2}$, and terminal 2 receives visible light at wavelength $\lambda_{VIS2}$ and transmits visible light at wavelength $\lambda_{VIS1}$.

At terminal 1, the transmitted visible signal $\lambda_{VIS2}$ acts as a beacon for the tracking sensors in terminal 2, and can also be used for channel estimation by terminal 2 in tracking subsystem 108c (which, as illustrated, includes a subsystem beam separator for splitting $\lambda_{VIS2}$ into two portions). The tracking subsystem 108c may also include polarization or wavefront error estimation. Similarly, at terminal 2, the transmitted visible signal $\lambda_{VIS1}$ acts as a beacon for the tracking sensors in terminal 1, and can also be used for channel estimation by terminal 1 in tracking subsystem 108c (which, as illustrated, includes a subsystem beam separator for splitting $\lambda_{VIS2}$ into two portions). The tracking subsystem 108c may also include polarization or wavefront error estimation.

The NIR channel can be used for QKD. Terminal 1 and terminal 2 each include first communication subsystem 108a for the NIR channel. While illustrated including a unidirectional fiber coupler, other components may be provided for IR signal processing (for example, to include an encoder or decoder or a bi-direcitonal fiber coupler). The first communication subsystem may be bi-directional for short range terrestrial links, and unidirectional for satellite-to-ground QKD links. The IR channel (implemented with second communication subsystem 108b in terminals 1 and 2 of Figure 800) can be used primarily for bidirectional classical communication. A QKD link can be multiplexed in the IR channel for daytime operation and/or for generating a large block of a secure key. Each terminal may include long-range optics such as telescope 120 for communication over long-range distances.

Any of the optical communication devices disclosed herein may be included on a satellite or other form of space vehicle. Thus, the disclosed optical devices may be used for long-distance satellite communications. The optical devices may also be included any other form of vehicle (such as an aircraft, boat or land vehicle) or on a ground station (i.e. on earth).

The above embodiments have been described as having particular application to quantum communication protocols, but it will be understood that the system may also be deployed for other forms of communication. For example, the first and second communication subystems may each be configured for classical communication. Thus, two parallel optical signals in two different optical bands may co-propagate within a single beam with a beacon signal. This allows for high capacity communication in a compact optical assembly.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

## Claims

1. An optical system comprising:

    an optical beam separator;
    a beam-steering device adapted to receive an incoming optical signal and to output the incoming optical signal to the optical beam separator;
    a plurality of subsystems comprising a first communication subsystem, a second communication subsystem and a tracking subsystem;
    wherein the optical beam separator is adapted to separate the incoming optical signal into a first signal in a first optical band, a second signal in a second optical band, and an input beacon signal in a third optical band, and is adapted to output the first optical signal to the first communication subsystem, to output the second signal to the second communication subsystem and to output the input beacon signal to the tracking subsystem; and
    wherein the tracking subsystem is adapted to determine an alignment of the input beacon signal based on a first portion of the input beacon signal, and to control the beam-steering device to adjust the input beacon signal alignment based on the determination.

2. The optical system of claim 1, wherein the optical beam separator comprises:

    a first wavelength sensitive beamsplitter arranged to separate the first signal and a first intermediate signal from the incoming optical signal,
    a second wavelength sensitive beamsplitter arranged to separate the second signal from the first intermediate signal.

3. The optical system of claim 1 or claim 2, wherein the first optical band is an infrared optical band or a near-infrared optical band, wherein the second optical band is an infrared optical band, a near infrared optical band or a visible light optical band; and wherein the third optical band is a visible light optical band.

4. The optical system of any preceding claim, wherein the tracking subsystem comprises:

    a position sensor configured to determine an axial position of the input beacon signal, wherein the tracking subsystem is configured to control the steering mirror to adjust the axial position of the input beacon signal to align the axial position of the input beacon signal with a reference axial position; and/or
    a power sensor configured to determine a power of the input beacon signal, wherein the tracking subsystem is configured to control the steering mirror to adjust the power of the input beacon signal in a closed loop with the power sensor to maximise the determined power value.

5. The optical system of any preceding claim, wherein the tracking subsystem further comprises:

    a beamsplitter arranged to separate the first input beacon signal portion and a second input beacon signal portion from the input beacon signal; and

a channel estimator arranged to perform channel estimation on the second beacon signal portion.

6. The optical system of any preceding claim,

wherein the first communication subsystem is adapted to output a third signal in the first optical band to the beam separator,
wherein the second communication subsystem is adapted to output a fourth signal in the second optical band to the beam separator; and
wherein the beam separator is further adapted to combine the third optical signal and the fourth optical signal into an output signal, and is adapted to output the output signal to the steering mirror.

7. The optical system of claim 6, wherein the plurality of subsystems further comprises a beacon signal generator adapted to output an output beacon signal to the beam separator, wherein the beam separator is further adapted to combine the output beacon signal with the third output signal and the fourth output signal into the output signal,
wherein, optionally, the beam separator further comprises a third wavelength sensitive beamsplitter arranged to combine the output beacon signal with the third output signal and the fourth output signal into the output signal.

8. The optical system of any preceding claim, wherein one or both of the first communication subsystem and second communication subsystem comprises a free-space to optical fiber coupler; and/or
wherein each of at least one of the plurality of subsystems comprises one or more spectral filters.

9. The optical system of any preceding claim, wherein the first optical communication subsystem comprises a subsystem beam separator adapted to split the first optical signal into a plurality of first optical sub-bands within the first communication band, and further adapted to combine received signals in the plurality of optical sub-bands into a signal in the first optical band; and/or
wherein the second optical communication subsystem comprises a subsystem beam separator adapted to split the second optical signal into a plurality of first optical sub-bands within the first communication band, and further adapted to combine received signals in the plurality of optical sub-bands into a signal in the first optical band.

10. The optical system of any preceding claim, wherein the first communication subsystem comprises at least one supplemental beamsplitter, the at least one supplemental beamsplitter adapted to split the first signal into a plurality of optical signal outputs, wherein each first supplemental beamsplitter is a power beamsplitter or a wavelength-sensitive beamsplitter; and/or
wherein the second communication subsystem comprises at least one supplemental beamsplitter, the at least one supplemental beamsplitter adapted to second the first signal into a plurality of optical signal outputs wherein each second supplemental beamsplitter is a power beamsplitter or a wavelength-sensitive beamsplitter.

11. The optical system of any preceding claim, further comprising a telescope assembly adapted to transmit and receive optical signals from the steering mirror.

12. A quantum communication device comprising an optical system of any preceding claim, wherein the first communication subsystem or second communication subsystem comprises a quantum decoder.

13. A quantum communication device according to claim 12, the quantum communication device further comprising a second optical system according to any one of claims 1 - 11, wherein the first communication subsystem or the second communication subsystem of the second optical system comprises a quantum encoder.

14. A space vehicle comprising an optical system according to any one of claims 1 - 11.

15. A method of communication, comprising:

receiving an incoming optical signal at a beam-steering device;
outputting the incoming optical signal to a beam separator;
separating, by the beam separator, the incoming signal into a first signal in a first optical band, a second signal in a second optical band, and an input beacon signal in a third optical band,
providing the first optical signal to a first communication subsystem;
providing the second signal to a second communication subsystem;
outputting the input beacon signal to a tracking subsystem; and
determining, by the tracking subsystem, an alignment of the input beacon signal based on a first portion of the input beacon signal; and
controlling the beam-steering device to adjust the beam-steering device to adjust the input beacon signal alignment based on the determination.

Figure 1

Figure 2

EP 4 440 003 A1

Figure 3

EP 4 440 003 A1

Figure 4

# Figure 5A

502

506

504

500-A

# Figure 5B

502

506

508

510

500-B

# Figure 5C

502

506

508

512

510a

510b

510c

514

500-C

EP 4 440 003 A1

EP 4 440 003 A1

## Figure 6A

602
($\lambda_A$)

612-2
($\lambda_A$)

604

608

612-1
($\lambda_A$)

606

600-A

## Figure 6B

602
($\lambda_A$)

612-1
($\lambda_{A1}$)

614-1
($\lambda_{A11}$)

604

609

612-2
($\lambda_{A2}$)

614-2
($\lambda_{A12}$)

606

612

600-B

Figure 7

700

710

730 ⟷ 720

740

750

760 ⟷ 770

# Figure 8

Europäisches
Patentamt

European
Patent Office

Office européen
des brevets

# EUROPEAN SEARCH REPORT

Application Number

EP 23 21 9563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/278335 A1 (SEGURA BEN WARREN [US] ET AL) 27 September 2018 (2018-09-27) * paragraphs [0032] - [0038]; figure 2 * ----- | 1-15 | INV. H04B10/112 H04B10/118 H04B10/70 |
| X | US 10 359 570 B1 (BELT ROBERT TODD [US] ET AL) 23 July 2019 (2019-07-23) * column 6, line 37 - column 8, line 37; figure 3 * ----- | 1,15 | |

**TECHNICAL FIELDS SEARCHED (IPC)**

H04B

The present search report has been drawn up for all claims

| Place of search | Date of completion of the search | Examiner |
|---|---|---|
| Munich | 4 June 2024 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9563

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | | Publication date | Patent family member(s) | | Publication date |
|---|---|---|---|---|---|
| US 2018278335 | A1 | 27-09-2018 | CN 207573362 U | | 03-07-2018 |
| | | | CN 212572557 U | | 19-02-2021 |
| | | | US 2018041279 A1 | | 08-02-2018 |
| | | | US 2018278335 A1 | | 27-09-2018 |
| | | | WO 2018026514 A1 | | 08-02-2018 |
| US 10359570 | B1 | 23-07-2019 | US 10359570 B1 | | 23-07-2019 |
| | | | WO 2018118380 A1 | | 28-06-2018 |